# EUROPÄISCHE PATENTSCHRIFT

(11) **EP 0 239 027 B1**
(45) Veröffentlichungstag und Bekanntmachung des Hinweises auf die Patenterteilung: **03.02.1993**
(21) Anmeldenummer: 87104121.6
(22) Anmeldetag: 20.03.1987
(51) Int. Cl.: G09F 21/04, G09F 13/22, G09F 13/26

(54) **Leuchtende Schrift- oder Bildzeichen zur aussenseitigen Befestigung an Fahrzeugen**
Illuminated character or image signs to be externally mounted on vehicles
Signes d'écriture ou images éclairées permettant leur fixation à l'extérieur des véhicules

(30) Priorität: 26.03.1986 DE 3610290
(43) Veröffentlichungstag der Anmeldung: 30.09.1987
(73) Patentinhaber: Wittke, Christian A., D-74249 Jagsthausen (DE)
(72) Erfinder: Wittke, Christian A., D-74249 Jagsthausen (DE)
(74) Vertreter: Kehl, Günther, Dipl.-Phys.

(56) Entgegenhaltungen:
- DE-A- 3 049 064
- DE-U- 8 502 755
- US-A- 3 995 152
- US-A- 4 457 089

## Beschreibung

Die Erfindung bezieht sich auf leuchtende Schrift- oder Bildzeichen zur außenseitigen Befestigung an Fahrzeugen.

Es ist bekannt, Schriftzeichen an Fahrzeugen zu beleuchten, um Informationen nach außen zu vermitteln. So wird beispielsweise die Information, daß es sich bei dem betreffenden Fahrzeug um ein Taxi handelt, dadurch vermittelt, daß meist auf dem Dach des Fahrzeuges ein von innen beleuchteter Kasten aus transparentem Material angeordnet wird, an dessen Außenseiten eine Platte befestigt ist, die Ausnehmungen in Form des Schriftzuges "TAXI" aufweist, so daß dieser Schriftzug leuchtend sichtbar wird.

Eine solche Anzeige an der Außenseite von Fahrzeugen ist unter mehreren Gesichtspunkten nicht zufriedendstellend. Ein Leuchtkasten der beschriebenen Art kann wegen seiner Abmessungen, insbesondere wegen seiner Dicke nicht an der Außenwand eines Fahrzeuges angebracht werden, da er dabei über die Außenkontur des Fahrzeuges vorsteht und Beschädigungen ausgesetzt ist. Werden die bekannten Schrift- oder Bildzeichen, die über einen Leuchtkasten beleuchtet werden, auf dem Dach, dem Kühler oder dem Kofferraum eines Fahrzeuges angeordent, so stellen sie ein erhebliches Hindernis für die Luftströmung dar, was sich insbesondere bei größeren Geschwindigkeiten, durch erhöhten Kraftstoffverbrauch und Pfeifgeräusche des Fahrtwindes bemerkbar macht.

Aus der US-A-3 995 152 ist eine elektrische Leuchtstruktur bekannt, die die Form eines Kunststoffstranges oder Kunststoffkabels aufweist. Bei dem bekannten Gegenstand sind Leuchtelemente in einem einstückigen Kunststoffstrang eingegossen. Diese Bauweise bringt es mit sich, daß die Herstellung von flachen, sich an die Wölbung einer Wand anpassende Leuchtbuchstaben nur sehr schwierig herzustellen sind.

Der Erfindung liegt daher die Aufgabe Zugrunde, leuchtende Schrift oder Bildzeichen zur außenseitigen Befestigung an Fahrzeugen zu schaffen, die sich durch eine flache Bauweise und insbesondere einen geringen Luftströmungswiderstand auszeichnen.

Die Lösung dieser Aufgabe ist im Patentanspruch 1 angegeben.

Leuchtende Schriftzeichen, die als aktiv leuchtende Körper ausgebildet sind, sind zwar bekannt (DE-PS 30 49 064; Unterlagen des deutschen Gebrauchsmusters G 85 02 755.3), diese bekannten Schriftzeichen sind jedoch zur außenseitigen Befestigung an Fahrzeugen weder vorgesehen noch geeignet.

Mit der Lösung gemäß der Erfindung werden dagegen leuchtende Schrift- oder Bildzeichen zur außenseitigen Befestigung an Fahrzeugen geschaffen, die sich durch geringen Platzbedarf, insbesondere durch eine flache Bauweise auszeichnen. Auch der Energieaufwand zur Beleuchtung der Schrift- oder Bildzeichen ist verringert.

Unter Schrift- oder Bildzeichen im Sinne der Erfindung sind dabei Ziffern, Buchstaben, Piktogramme, Symbole, Bildmuster, aber auch einfache Konturlinien zu verstehen.

Nach einer vorteilhaften Ausführungsform der Erfindung weisen die Schrift- oder Bildzeichen Befestigungsmittel zu ihrer Befestigung anliegend an der Außenwand eines Fahrzeuges auf. Wenn die Schrift- oder Bildzeichen nach dieser Ausführungsform selbst an einer nahezu vertikalen Außenwand des Fahrzeuges befestigt werden, stehen sie wegen ihrer flachen Bauweise nur wenig vor, weswegen sie gegen mechanische Belastungen aller Art weitgehend unempfindlich sind.

Nach einer weiteren vorteilhaften Ausführungsform bestehen die Befestigungsmittel aus einer an der Rückseite der Schrift- oder Bildzeichen aufgebrachten Klebstoffschicht. Vorzugsweise ist die Befestigungsfläche der Schrift- oder Bildzeichen von einer oder mehreren Nuten durchzogen, so daß überschüssiger Klebstoff in diese Nuten einfließen kann, so daß ein sicherer Sitz der Schrift- oder Bildzeichen an der Karosseriewand des Fahrzeuges gewährleistet ist.

Wie oben bereits erläutert, weisen die Schrift- oder Bildzeichen gemäß der Erfindung bereits wegen ihrer kleinen und flachen Bauweise einen geringen Luftströmungswiderstand auf, sei es, daß sie auf dem Dach eines Fahrzeuges oder an der Außenwand eines Fahrzeuges angeordnet sind. Nach einer besonders vorteilhaften Ausführungsform der Erfindung kann jedoch der Luftströmungswiderstand der Schrift- oder Bildzeichen des weiteren dadurch verringert werden, daß diese stromlinienförmig, d. h. in einer Form ausgebildet werden, die einen geringen Luftströmungswiderstand verursacht. Bei Schrift- oder Bildzeichen, die beispielsweise auf dem Dach eines Kraftfahrzeuges anzuordnen sind, wird die Form so gewählt, daß die Schrift- oder Bildzeichen im Teilquerschnitt rund oder oval sind.

Für Schrift- oder Bildzeichen, die an einer Außenwand des Kraftfahrzeuges anliegend angeordnet werden, ist nach einer anderen Ausführungsform der Erfindung ein etwa kreissegmentförmiger Teilquerschnitt vorgesehen.

Nach einer weiteren Ausführungsform der Erfindung dienen zur Beleuchtung der Schrift- oder Bildzeichen mehrere Lumineszenzdioden (LED). Nach einer anderen Ausführungsvariante der Erfindung sind mehrere Glimmlampen zur Beleuchtung der Schrift- oder Bildzeichen vorgesehen.

Des weiteren ist es möglich, nach einer anderen Ausführungsform der Erfindung eine rohrförmige, an die Form der Schrift- oder Bildzeichen angepaßte Lichtquelle vorzusehen. Diese kann als Glühlampe mit einem Glühfaden ausgerüstet sein. Nach einer anderen vorteilhaften Ausführungsform der Erfindung ist vorgesehen, die rohrförmige Lichtquelle als Leuchtstoffröhre auszubilden.

Nach einer weiteren Ausführungsform ist die rohrförmige Lichtquelle als Glimmlampe ausgebildet, wobei die Glimmkathode in Anpassung an die Form des Schrift- oder Bildzeichens ausgeformt ist.

Der oben erwähnte geringe Energieverbrauch, insbesondere in Verbindung mit der Verwendung von Lumineszenzdioden ermöglicht es, die Leucht- oder Schriftbildzeichen mit dem Strom aus einem Solarzellenaggregat zu versorgen. Eine Verlegung eines Anschlußkabels zu der Batterie des Fahrzeuges ist daher nicht erforderlich. Durch einen zwischengeschalteten Akkumulator können Leistungsschwankungen des Solarzellenaggregats in an sich bekannter Weise ausgeglichen werden.

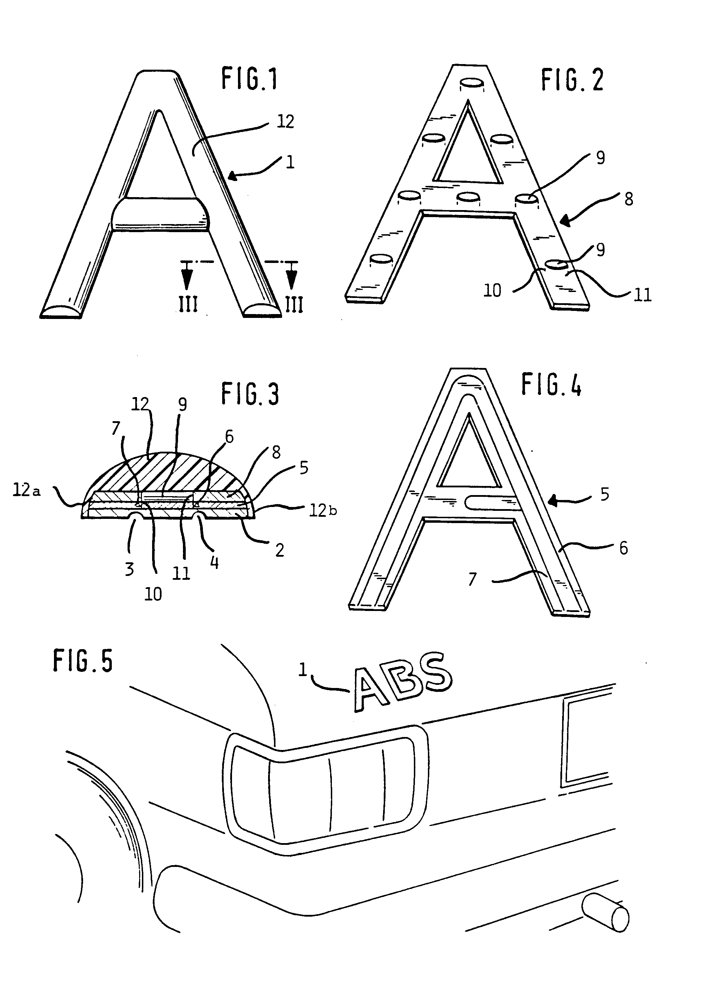

Die Erfindung wird nachfolgend anhand des in den Figuren 1 bis 5 schematisch dargestellten Ausführungsbeispieles näher erläutert. Es zeigt:
- Figur 1:: ein Schriftzeichen in perspektivischer Darstellung;
- Figur 2:: eine Schicht aus dem Schriftzeichen der Figur 1, ebenfalls in perspektivischer Darstellung;
- Figur 3:: einen Schnitt längs der Schnittlinie III-III in Figur 1;
- Figur 4:: eine weitere Schicht aus dem Schriftzeichen der Figur 1;
- Figur 5:: ein aus dem Schriftzeichen zusammengesetzter Schriftzug angebracht an einem Kraftfarzeug;
Ein leuchtendes Schriftzeichen 1, das als selbstaktiv leuchtender Körper ausgebildet ist, ist in Figur 1 dargestellt. Als Beispiel ist der Buchstabe "A" des Alphabets gewählt. Wie in Figur 1 zu erkennen ist, ist das Schriftzeichen im Teilquerschnitt kreissegmentförmig, d. h. die einzelnen "Striche" des "A" weisen einen kreissegmentförmigen Querschnitt auf.

Wie der in Figur 3 dargestellte Teilquerschnitt zeigt, besteht das Schriftzeichen aus mehreren Schichten. Eine Trägerschicht 2 weist zwei in Längsrichtung verlaufende Nuten 3 und 4 auf. Die Trägerschicht 2 ist mit einer Klebstoffschicht (nicht dargestellt) überzogen. Über der Trägerschicht 2 ist eine Schicht 5 aus Isoliermaterial vorgesehen, in die zwei in Richtung senkrecht zur Zeichenebene verlaufende Leiterbahnen 6 und 7 eingelassen sind. Die Schicht 5 aus Isoliermaterial ist in Figur 4 zusammenhängend perspektivisch gezeichnet. In Figur 4 ist der Verlauf der Leiterbahnen 6 und 7 zu erkennen.

Die Schicht aus Isoliermaterial 5 ist - wie aus Figur 3 deutlich zu erkennen ist - überdeckt mit einer weiteren Trägerschicht 8, die ebenfalls aus Isoliermaterial besteht. In die Trägerschicht 8 sind Lumineszenzdioden oder LEDs 9 eingelassen. Die Lötfahnen 10 und 11 der Lumineszenzdioden 9 ragen aus der Schicht 8 heraus. Sie dringen in die darunter liegende Schicht 5 ein, in der die Leiterbahnen 6 und 7 eingelassen sind. Wie Figur 3 zeigt, treten die Lötfahnen 10 und 11 in Kontakt mit den Leiterbahnen 6 und 7, so daß die Lumineszenzdioden 9 mit ihren Lötfahnen 10 und 11 an die Leiterbahnen 6 und 7 elektrisch angeschlossen sind. In Figur 2 ist die Trägerschicht 8 für die Lumineszenzdioden einzeln in perspektivischer Darstellung gezeigt. Wie Figur 2 zeigt, sind mehrere Lumineszenzdioden 9 in die Schicht 8 eingelassen. In Figur 2 sind aus Gründen der einfachen Darstellung nur wenige Lumineszenzdioden gezeigt. Selbstverständlich können diese in wesentlich dichterer Folge angeordnet werden. Entscheidend ist, daß die Gesamtheit der Leuchtelemente die Form eines darzustellenden Schrift- oder Bildzeichens einnimmt, so daß das Schrift oder Bildzeichen als aktiv-selbstleuchtender Körper erscheint. In Figur 2 sind die Lötfahnen 10 und 11 der Lumineszenzdioden 9, die nach unten aus der Schicht 8 hervorragen, gestrichelt eingezeichnet.

Wie in Figur 3 zu sehen ist, wird die Trägerschicht 8 für die Lumineszenzdioden 9 von einer Kunststofflinse 12 überdeckt. Die Linse 12 weist im Querschnitt etwa die Form eines Ellipsenabschnittes auf, wobei die Ellipse längs ihrer großen Halbachse, etwas in Richtung auf den Randbereich zu dieser versetzt, geschnitten ist. Einstückig mit der Kunststofflinse 12 sind zwei längsverlaufende Lippen 12a und 12b, durch die das Außenprofil der Linse 12 über die Ellipsensekante hinausgeführt wird. Die Lippen 12a und 12b sind leicht hinterschnitten, so daß die Linse 12 unter elastischer Verformung ihrer Lippen 12a und 12b auf den aus den Schichten 2, 5 und 8 bestehenden Block aufgeklipst werden kann. Durch die optische Wirkung der Linse 12 erscheinen die Lumineszenzdioden 9, ähnlich wie durch die Wirkung eines Lesetabes, vergrößert, so daß dem Betrachter der Eindruck eines großflächigen Leuchtelementes vermittelt wird.

Die Materialien, aus denen sich das Leuchtschriftzeichen zusammensetzt, sind in Abstimmung mit der Dicke des Leuchtschriftzeichens so gewählt, daß dieses leicht gewölbt werden kann. Hierdurch wird das Anbringen des Leuchtschriftzeichens auf einen gewölbten Untergrund, wie beispielsweise auf dem Kofferraumdeckel eines Kraftfahrzeuges erleichtert.

Wenn das Leuchtschriftzeichen auf einen Untergrund aufgeklebt wird, dienen die oben beschriebenen Nuten 3 und 4 dazu, überschüssigen Klebstoff aufzunehmen, so daß das Schriftzeichen satt auf dem Untergrund aufliegt.

Figur 5 zeigt einen Schriftzug, der aus oben beschriebenen Leuchtbuchstaben zusammengesetzt ist, angebracht auf dem Kofferraumdeckel eines Kraftfahrzeuges. Erkennbar ist, daß die Leuchtschriftzeichen an die Wölbung des Kofferraumdeckels angepaßt sind.

## Patentansprüche

1. Aktiv leuchtendes Schritt- oder Bildzeichen (1), das anliegend an der Außenfläche eines Fahrzeugs befestigtbar ist und aus einem sich entsprechend dem Verlauf des Schrift- oder Bildzeichens erstreckenden Körper besteht, der elektrische Leiterbahnen (6, 7) und mit den Leiterbahnen (6, 7) verbundene Lichtquellen (9) aufweist, dadurch **gekennzeichnet**, daß der Körper eine erste Isolierschicht (5) aus biegbarem Material aufweist, die die elektrischen Leiterbahnen (6, 7) enthält, daß der Körper eine zweite Isolierschicht (8) aus biegbarem Material aufweist, in die die Lichtquellen (9) eingelassen sind, die mit den Leiterbahnen (6, 7) der ersten Schicht (5) elektrisch verbunden sind, und daß eine bogenförmige lichtdurchlässige und lichtbrechende biegbare Deckschicht (12) vorgesehen ist, die auf der zweiten Isolierschicht (8) aufliegt und einrastbare Haltemittel zum Halten der übereinander angeordneten Schichten (5, 8) aufweist.

2. Schrift- oder Bildzeichen nach Anspruch 1, gekennzeichnet durch Befestigungsmittel zur Befestigung der Schritt- oder Bildzeichen anliegend an der Außenwand eines Fahrzeugs.

3. Schrift- oder Bildzeichen nach Anspruch 2, dadurch gekennzeichnet, daß die Befestigungsmittel aus einer an der Rückseite der Schritt- oder Bildzeichen aufgebrachten Klebstoffschicht bestehen.

4. Schritt- oder Bildzeichen nach Anspruch 3, dadurch gekennzeichnet, daß die Rückseite mit mindestens einer Nut (3, 4) versehen ist.

5. Schritt- oder Bildzeichen nach einem der der Ansprüch 1 bis 4, dadurch gekennzeichnet, daß sie eine einen geringen Luftströmungswiderstand verursachende Form aufweisen.

6. Schrift- oder Bildzeichen nach einem der Ansprüche 1 bis 5, dadurch gekennzeichnet, daß sie im Teilquerschnitt (Fig. 3) die Form eines Kreissegments oder die Form eines Ellipsensegments aufweisen.

7. Schrift- oder Bildzeichen nach einem der Ansprüche 1 bis 6, dadurch gekennzeichnet, daß sie mehrere Lumineszenzdioden (9) aufweisen.

8. Schrift- oder Bildzeichen nach einem der Ansprüche 1 bis 6, dadurch gekennzeichnet, daß sie mehrere Glimmlampen aufweisen.

9. Schrift- oder Bildzeichen nach einem der Ansprüche 1 bis 6, dadurch gekennzeichnet, daß sie eine rohrförmige in Anpassung an die Form der Schritt- oder Bildzeichen (1) gebogene Lichtquelle aufweisen.

10. Schritt- oder Bildzeichen nach Anspruch 9, dadurch gekennzeichnet, daß die Lichtquelle einen Glühfaden enthält.

11. Schritt- oder Bildzeichen nach Anspruch 9, dadurch gekennzeichnet, daß die Lichtquelle als Leuchtstofflampe ausgebildet ist.

12. Schrift- oder Bildzeichen nach Anspruch 9, dadurch gekennzeichnet, daß die Lichtquelle als Glimmlampe ausgebildet ist und die Glimmkathode in Anpassung an die Form der Schritt- oder Bildzeichen ausgeformt ist.

13. Schritt- oder Bildzeichen nach einem der Ansprüche 1 bis 12, dadurch gekennzeichnet, daß die lichtbrechende Deckschicht die Form einer zylindrischen oder elliptischen Linse (12) aufweist.

## Claims

1. Illuminated character or image sign (1) which may be secured adjacent the external surface of a vehicle and which comprises a body whose shape corresponds to that of the character or image sign and which has electrical conductor paths (6,7) and light sources (9) connected to the conductor paths (6,7), characterised in that the body has a first insulating layer (5) of flexible material which contains the electrical conductor paths (6,7), that the body has a second insulating layer (8) of flexible material in which the light sources (9) are embedded which are electrically connected to the conductor paths (6,7) in the first layer (5) and that an arcuate, translucent and refractive flexible cover layer (12) is provided which is supported on the second insulating layer (8) and has lockable retaining means for holding the layers (5,8) arranged above one another.

2. Character or image sign as claimed in claim 1, characterised by fastening means for fastening the character or image signs adjacent to the external wall of a vehicle.

3. Character or image sign as claimed in claim 2, characterised in that the fastening means comprise an adhesive layer applied to the rear surface of the character or image signs.

4. Character or image sign as claimed in claim 3, characterised in that the rear surface is provided with at least one groove (3,4).

5. Character or image signs as claimed in one of claims 1 to 4, characterised in that they have a shape which produces a low air flow resistance.

6. Character or image signs as claimed in one of claims 1 to 5, characterised in that in scrap cross-section (3) they have the shape of a circular segment or the shape of an elliptical segment.

7. Character or image signs as claimed in one of claims 1 to 6, characterised in that they have a plurality of luminescence diodes (9).

8. Character or image signs as claimed in one of claims 1 to 6, characterised in that they have a plurality of fluorescent lamps.

9. Character or image signs as claimed in one of claims 1 to 6, characterised in that they have a tubular curved light source matching the shape of the character or image signs (1).

10. Character or image signs as claimed in claim 9, characterised in that the light source includes a filament.

11. Character or image signs as claimed in claim 9, characterised in that the light source is constructed as a fluorescent lamp.

12. Character or image signs as claimed in claim 9, characterised in that the light source is constructed as a glow lamp and the glow discharge cathode is shaped to match the shape of the character or image signs.

13. Character or image signs as claimed in one of claims 1 to 12, characterised in that the refracting cover layer has the shape of a cylindrical or elliptical lens (12).

## Revendications

1. Caractère ou symbole (1) lumineux actif, qui peut être fixé sur la surface extérieure d'un véhicule et se compose d'un corps correspondant à l'emprise du caractère ou du symbole, de bandes conductrices électriques (6,7) et de sources lumineuses (9) reliées à celles-ci, caractérisé en ce que le corps comporte une première couche isolante (5) en matériau cintrable, qui renferme les bandes conductrices électriques (6,7), en ce que le corps comporte une deuxième couche isolante (8) en matériau cintrable, dans laquelle sont encastrées des sources lumineuses (9), qui sont reliées électriquement aux bandes conductrices électriques (6,7) de la première couche (5) et en ce qu'il est prévu une couche de recouvrement en arc (12), cintrable, réfringente et translucide, qui s'applique sur la deuxième couche isolante (8) et comporte des moyens de retenue encliquetables servant au maintien des couches (5,8) placées l'une au-dessus de l'autre.

2. Caractères ou symboles selon la revendication 1, caractérisés par des moyens de fixation servant à fixer les caractères ou les symboles contre la paroi externe d'un véhicule.

3. Caractères ou symboles selon la revendication 2, caractérisés en ce que les moyens de fixation comportent une couche de colle appliquée sur le dos des caractères ou des symboles.

4. Caractères ou symboles selon la revendication 3, caractérisés en ce que le dos est pourvu au minimum d'une rainure (3,4).

5. Caractères ou symboles selon l'une des revendications 1 à 4, caractérisés en ce qu'ils présentent une forme provoquant une faible résistance à l'air.

6. Caractères ou symboles selon l'une des revendications 1 à 5, caractérisés en ce qu'ils présentent en section transversale (figure 3) la forme d'un segment circulaire ou d'un segment d'ellipse.

7. Caractères ou symboles selon l'une des revendications 1 à 6, caractérisés en ce qu'il comportent plusieurs diodes à luminescence (9).

8. Caractères ou symboles selon l'une des revendications 1 à 6, caractérisés en ce qu'ils comportent plusieurs lampes au néon.

9. Caractères ou symboles selon l'une des revendications 1 à 6, caractérisés en ce qu'ils comportent une source lumineuse tubulaire cintrée, adaptée à la forme des caractères ou symboles (1).

10. Caractères ou symboles selon la revendication 9, caractérisés en ce que la source lumineuse comporte un filament incandescent.

11. Caractères ou symboles selon la revendication 9, caractérisés en ce que la source lumineuse est un tube fluorescent.

12. Caractères ou symboles selon la revendication 9, caractérisés en ce que la source lumineuse est une lampe au néon et la cathode ionique est d'une forme adaptée à celles des caractères ou symboles.

13. Caractères ou symboles selon l'une des revendications 1 à 12, caractérisés en ce que la couche de recouvrement réfringente présente la forme d'une lentille (12) cylindrique ou elliptique.
